# EUROPEAN PATENT APPLICATION

(11) **EP 4 618 532 A1**
(43) Date of publication of application: **17.09.2025**
(21) Application number: 24163889.9
(22) Date of filing: 15.03.2024
(51) Int. Cl.: H04N 17/00, G02B 27/32, H04N 7/18

(54) **AN OPTICAL SAFETY DEVICE**

(71) Applicant: Inxpect S.p.A., 25131 Brescia (BS) (IT)
(72) Inventor: Bertacchini, Ugo, 25131 Brescia BS (IT)
(74) Representative: Perani & Partners S.p.A.

(57) **Abstract**

An optical safety device (1) comprises a housing (2), a lens (3) mounted in a lens opening (22), and an image sensor (4). The lens (3) is configured to focus, on a sensitive surface (41) of the image sensor (4), a main optical image of a field of view, onto a focus area (A). A visual marker (7) is arranged on a marker support of the housing (2) within the field of view, such that a marker optical image is received on a marker projection area (E) of the focus area (A) of the image sensor (4). A processing system (5) is configured to analyze a fixed marker portion (64) of a first digital image (61), formed from marker image data collected by the image sensor (5) on the marker projection area (E), and thus to establish an image quality level.

## Description

### Field of the invention

The present invention relates to optical safety devices, and to hybrid safety devices including an image sensor and a further target detection sensor, preferably a radar sensor. In particular, these devices are intended for monitoring hazards, such as personnel approaching dangerous machinery in an industrial environment.

### Background of the invention

Optical devices such as cameras are known in the art to include a lens and an image sensor, collecting image data. The lens focuses an optical image of the field of view on a focus area located at least in part on the optical sensor.

Usually, the image sensor is rectangular and the focus area is circular. In different applications, the image sensor may be sized bigger or smaller compared to the focus area. When the focus area is completely contained on the sensitive surface of the image sensor, the resulting image contains the full field of view of the lens, with its borders, and also some areas of the inside of the device, around the lens, which usually appear dark. Of course, the image may be cut, for example by digitally zooming, to hide the borders of the field of view.

Instead, when the image sensor is completely internal to the focus area, the borders of the field of view, as well as some peripheral parts thereof, are not detected by the image sensor, and the output image only contains a portion of the field of view of the lens.

There are also intermediate cases, with the focus area and the image sensor only partially overlapping each other.

In the field of safety, many different kinds of sensors may be used to detect unsafe conditions. However, while the unsafe conditions are determined from the collected data, it is paramount to monitor the accuracy of the sensor. In fact, in case the sensor is turned off, or is damaged, or is disturbed, it may become insensitive to unsafe conditions. In this case, the occurrence of an actual unsafe condition could be missed, and so a fall in the accuracy of the sensor is considered intrinsically unsafe.

In known systems, the accuracy of an optical device is estimated based on a visual marker, to be placed in the field of view in a fixed position relative to the optical device. The visual marker depicts a predetermined image, usually being a geometric pattern. So, the device compares the acquired image of the marker with stored parameters, to determine if the device is correctly calibrated, if the lens is contaminated, and if something the environment may obstruct the vision.

However, the marker must always be visible by the optical device. So, it requires an attentive installation in a fixed position, without incurring in damages for the whole lifetime of the optical device.

### Summary of the invention

The Applicant has tackled the problem of checking proper operation of an optical or hybrid device, while simplifying installation of the marker and giving it more protection during the lifetime of the optical device.

This and other problems are solved by an optical safety device or a hybrid safety device according to any one of the appended claims.

The invention provides that the visual marker is arranged within the field of view of the lens, on a marker support portion of the housing of the device, such as at a perimetral portion of the lens opening of the housing. Thus, its image reaches a marker projection area of the image sensor and is collected thereby.

In this manner, the marker is not inside the monitored area of the field of view, but still falls in a marker portion of the image. In preferred embodiments, the marker can be excluded from the main output surveillance image, without significantly affecting the field of view.

Moreover, the marker can be easily pre-mounted to the housing of the device, without the need to find the best place on a case-by-case basis, depending on the environment to be monitored.

### Brief description of the drawings

The present invention will now be described in more detail hereinafter with reference to the accompanying drawings, in which embodiments of the invention are shown.
FIG. 1 is a schematic perspective view of an optical safety device 1 according to one embodiment of the present invention, with a fully circumferential visual marker,
FIG. 2 is a schematic section view of a portion of the device of figure 1, with a reduced marker,

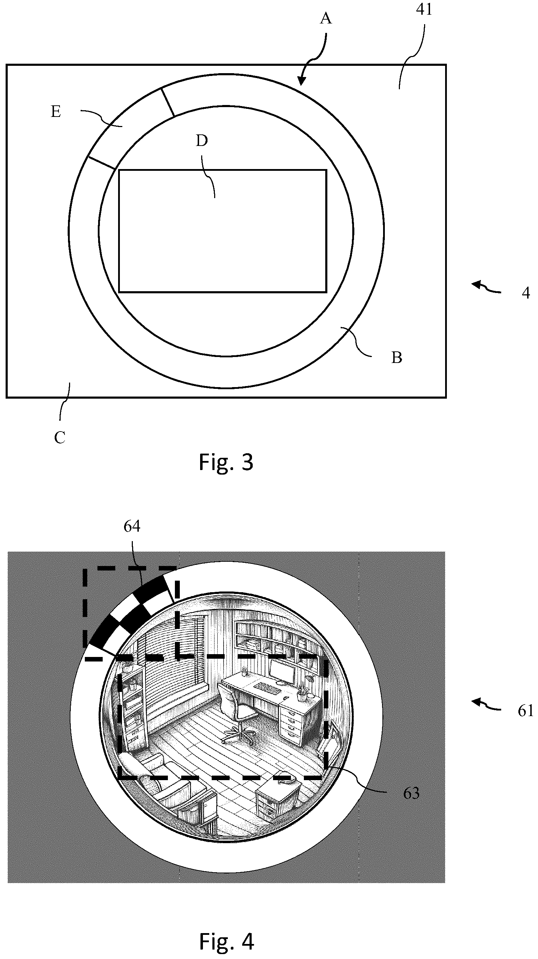

FIG. 3 is a schematic view of an image sensor of the device of figure 2, where portions receiving from a lens different kinds of optical images are highlighted,
FIG. 4 is a schematic view of an example overall digital image formed by the device of one embodiment of the invention,
FIG.s 5a-5b are schematic views of two distinct digital images formed by the device of another embodiment of the invention, in case no overall digital image is formed, and

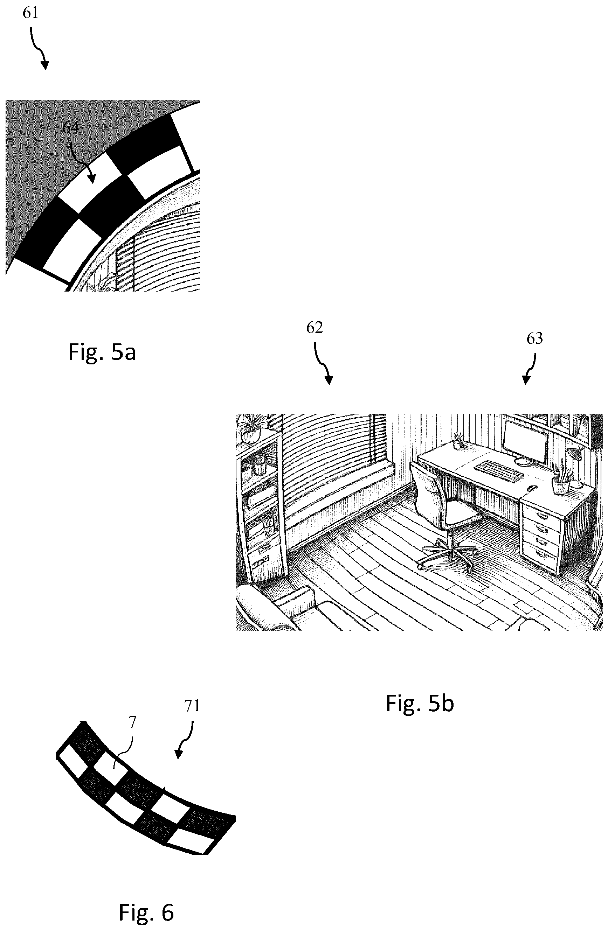

FIG. 6 is a schematic perspective view of a label including a visual marker for use in the device of the invention.

### Detailed description

One aspect of the invention relates to an optical safety device 1. Another aspect relates to a hybrid safety device (not shown), having all the features described below for the optical safety device, and further including another target detection sensor, such as a radar, a lidar or a laser scanner, preferably a radar. In fact, it is known that a safety device based on the combination of optic and other technologies, such as radar, generally achieves greater accuracy.

The safety device 1 comprises a housing 2, with walls enclosing one or more chambers for receiving some components described below. The walls of the housing 2 include a front wall 21 with a main outer surface. The front wall 21 also has a lens opening 22 designed for mounting an optical lens 3. The lens opening 22 is contoured by a perimetral portion 23 of the front wall 21. In preferred embodiments, the lens opening 22 and the perimetral portion 23 are substantially circular.

The device 1 comprises an optical lens 3, configured to focus light from a field of view, including the environment outside the housing 2, toward the inside of the housing 2, in particular to a focus area A described below. Preferred embodiments of the lens 3 are dome-shaped, with the dome oriented toward the outside of the housing 2. Preferably, the lens 3 is a wide-angle lens.

The lens 3 has a lens edge 31, and is mounted in the lens opening 22 at the lens edge 31. It is worth noting that the lens 3 is usually located in a recessed position in the front wall 21, such that impacts with other bodies are less likely to damage the lens 3, but will generally hit the housing 2. For this purpose, the perimetral portion 23 may have a perimetral rib (not shown) projecting from the main outer surface of the front wall 21, beyond the lens 3. Otherwise or in addition, an inner edge 24 of the perimetral portion 23 may be arranged more outward from the housing 2 compared to the lens 3. In more detail, the lens 3 may be fixed at a base wall 25 of the perimetral portion 23, and the perimetral rib or inner edge 24 may project outward from the base wall 25.

This results in at least a portion of the perimetral portion 23 preferably falling in the field of view of the lens 3, and thus being visible from an appropriate observation point inside the housing 2 through the lens 3.

An image sensor 4 is arranged inside the housing 2, proximate to the lens opening 22. The image sensor 4 is a known electronic element, preferably with a rectangular shape, having an image sensitive surface 41 and a signal output. In particular, the image sensor 4 is configured to collect image data based on light incident on the sensitive surface 41, and to output the image data, in an analog or digital form, through the signal output.

The shape of the lens 3 and the relative position of the lens 3 and the image sensor 4 are designed such that the lens 3 focuses a main optical image of a field of view outside the housing 2 on a focus area A that is located at least partially on the sensitive surface 41 of the image sensor 4 and is preferably circular.

Thus, light from light sources in different positions of the environment, within the field of view, is projected by the lens 3 on different points of the focus area A, whereby the main optical image is formed. In particular, the field of view of the lens 3 has a lens angle of view α, determined by the shape of the lens 3.

The focus area A is encircled and delimited by a focus border, located at least in part on the sensitive surface 41, where light is projected from the outermost regions of the field of view, corresponding to the lens angle of view α**.** Preferably, the lens 3 is also configured to project a border image of the perimetral portion 23 on a contour portion B inside the focus area A, along the focus border.

The focus area A is preferably fully contained on the sensitive surface 41, which also has an external portion C outside the focus border. The external portion C does not receive light focused by the lens, but at most light from the inside of the housing 2, that is preferably dark. One embodiment of this kind is known as circular fisheye.

In this case, the image data collected by the image sensor 4 is visually representative of the entire field of view of the lens 3, possibly including the perimetral portion 23, as well as a portion of the inside of the housing 2. Thus, this position and size of the image sensor 4 allows the image data cover an angle of view on the environment that is the same as the lens angle of view α, plus regions of the inside of the housing 2 beyond the lens angle of view α.

In other embodiment, the focus area A need not be fully contained on the sensitive surface 41, provided that at least a portion of both is located on the sensitive surface.

A processing system 5 is in signal communication with the image sensor 4 to receive the image data. The processing system 5 is preferably arranged inside the housing 2, but may also be remote therefrom. The processing system 5 may be embodied as one or more electronic units, as known by the skilled person.

The processing system 5 is configured to form one or more digital images 61, 62 by processing the image data.

In particular, in order to perform its safety functions, the processing system is configured to output a main surveillance digital image 63 of the field of view. Unsafe conditions, in particular including the presence of targets, are sought by the processing system 5 from the main surveillance digital image 63.

Preferably, the main surveillance image 63 is formed to visually exclude the perimetral portion 23 of the housing 2. In other words, the main surveillance image 63 is only formed from image data collected on a main portion D of the sensitive surface 41 of the image sensor 4. Thus, the main portion D is preferably fully contained in the focus area A, and separate from the contour portion B.

It is to be noted that the main portion D is usually rectangular, and so the main surveillance digital image 63 is formed to cover an output angle of view β, in the width direction of the rectangle, smaller than the lens angle of view α.

From the above, it follows that not all the image data collected by the image sensor 4 is used to form the main surveillance image 63. In particular, the main surveillance image 63 may be formed in the following two ways. In a first way, the processing system 5 forms a first image 61 that is wider than the main surveillance image 63. Preferably the first image 61 if formed from the whole image data collected by the image sensor 4. Then, the main surveillance image 63 is formed by cutting a portion from the first image 61, for example by digitally zooming.

In a second way, no image is formed from the whole image data collected by the image sensor 4, but one or more separate images 61, 62 are each formed from distinct portions of the collected image data. In more detail, a first image 61 will cover something described below, and the second image 62 is the main surveillance image 63.

The invention provides that the safety device 1 comprises a visual marker 7 on a marker support portion of the housing 2, in the field of view of the lens 3. So, the visual marker 7 is not remote from the housing 2 as provided in the prior art.

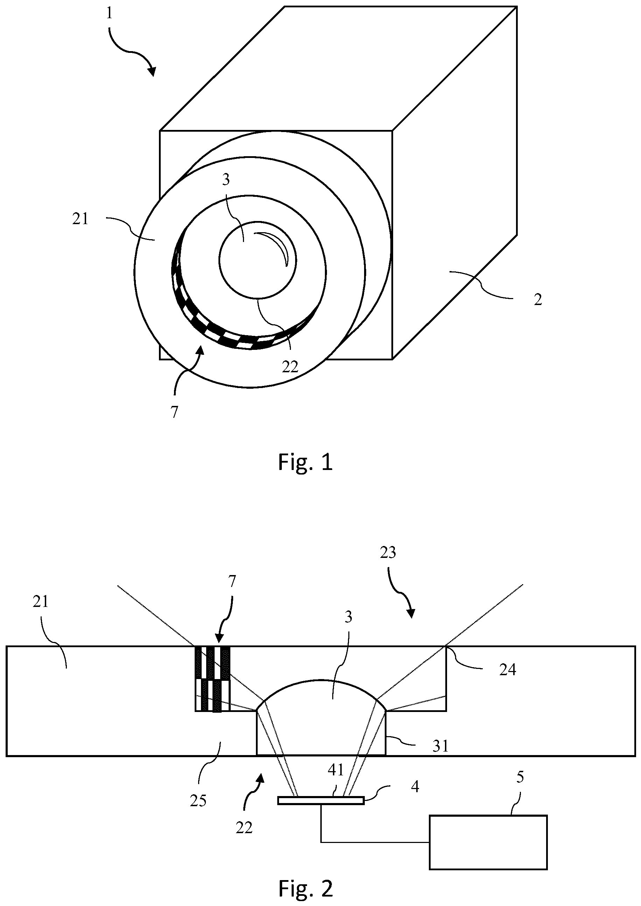

In the preferred embodiments, the visual marker 7 is arranged at the perimetral portion 23 of the housing 2. The visual marker 7 may cover an entire circumference around the lens 3, as shown in figure 1, or just a part of the perimetral portion 23.

In other embodiments, the marker support portion may project toward a center of the field of view compared to the perimetral portion 23 of the housing 2.

Preferably, the visual marker 7 projects toward the outside of the housing 2 compared to the lens edge 31. Preferably, the marker 7 is oriented toward a central axis of the lens 3.

It is to be noted that the position of the marker 7 is fixed relative to the housing 2 and/or the lens 3. Therefore, the lens 3 projects a marker optical image of the marker 7 on a fixed marker projection area E of the focus area A, which is generally separate from the main portion D.

Image data collected on the marker projection area E are represented in a marker portion 64 of the first digital image 61. In case the first image 61 is formed from the whole image data of the image sensor 4, the marker portion 64 is just a portion of the first digital image 61 that is distinct from the main surveillance image 63. The marker portion 64 can be cut or just identified by the processing system from the first image 61 (for example by digital zooming), for further analysis as described below.

Instead, in case no image is formed from the whole image data of the image sensor 4, the marker portion 64 may coincide with the first image 61, that is distinct from the second image 62 with the main surveillance image 63.

The processing system 5 is configured to analyze the marker portion 64 of the first image 61 and based on this analysis to determine an image quality level, which can be in the form of one or more image quality and/or calibration parameters.

The analysis and determination of the image quality level may be performed substantially as already known to the skilled person, for the prior art systems where the visual marker was placed in the environment.

In detail, the visual marker 7 preferably shows a geometric pattern in at least two high-contrasting colors, such as black and white. Preferred examples of geometric patterns are patterns with parallel bars, and chessboard patterns. In any case, the geometric pattern preferably the areas containing the two colors are each delimited by contrast lines, being the lines separating the two colors.

As the appearance of the marker 7 in controlled conditions is known, the analysis of the marker portion 64 of the first image 61 may result in the determination of image parameters like contrast, focus, zooming level and white balance. These parameters may be used both to determine the quality of the image and to calibrate the device 1. In fact, it is known that most optical devices may be calibrated to adjust these and other parameters, based on user input or an automatic mode. So, measuring these parameters allows the processing system to check if desired values have been obtained, or if further adjustment is needed, and also allows setting other operation parameters like auto-exposure, auto-gain and auto-white balance parameters.

In preferred embodiments, the processing system 5 can be configured to directly set device calibration parameters based on the analysis of the fixed marker portion 64 of the first digital image 61. In particular, in absence of a user calibration, and so before the calibration parameters are set to any value, the device 1 may work based on default parameters. Then, calibration parameters may be set for the first time by checking the appearance of the marker portion 64.

Other image quality parameters which can be obtained from the analysis are image distortion, presence of dirt, liquids, condensate or other disturbing material on the lens 3, and presence of rain, fog, gas or other disturbing material in the environment. Further data obtainable from such analysis is an ageing of the lens and/or image sensor quality, which may deteriorate, for example losing transparency, despite not being contaminated.

As described above, the processing system 5 may determine the image quality level directly from the marker portion 64.

In other embodiments, the processing system 5 may have previously stored a saved marker image visually matching the visual marker 7. For example, the saved marker image could be preventively computer loaded in the processing system 5, or it can be acquired from the first digital image 63 and stored during a preventive setup step of the safety device 1. Then, the analysis to determine the image quality level may involve comparing the marker portion 64 of the first digital image 61 with the saved marker image.

In some embodiments, the visual marker 7 is an image that is directly represented on the perimetral portion 23 of the housing 2. For example, the marker 7 may be an image that is printed on the perimetral portion 23, or it can be an image formed by an arrangement of parts of the perimetral portion 23 made of materials with different colors. In these cases, the marker support portion is the perimetral portion 23 of the housing 2.

In other embodiments, the visual marker 7 is an image represented on a marker piece 71, removably fixed to the remainder of the housing 2. Thus, the marker support portion is the marker piece 71. The marker piece 71 can be for example a label or a rigid marker piece 71. The rigid marker piece 71 can be a new body designed only for the purpose of showing the visual marker 7 of the invention, or it can be another element already having other purposes related to the optic device, such as a lens hood. In some embodiments, the marker piece 71 may comprise a plate, having the visual marker 7 thereon, fixed to the perimetral portion 23 by an arm.

In still other embodiments, the visual marker 7 can be a combination of the above. For example, the visual marker 7 may be an image formed by an alternated arrangement of parts of a rigid marker piece 71 and parts of the perimetral portion 23, having different colors.

In the case of a hybrid safety device, a further target detection sensor, such as a radar, lidar or laser scanner sensor, is provided and is in signal communication with the processing system 5. Thus, the processing system 5 may seek for unsafe conditions based on both the main surveillance image 63 and further detection data collected by the further target detection sensor. Thus, the processing system 5 is configured to run data fusion algorithms for combining detection data from the image sensor 4 and the further target detection sensor. While maximum accuracy is achieved when both the sensors are active, the hybrid safety device may still keep on operating with reduced performances when just one of them is active.

In some embodiments, the further target detection sensor is arranged in the same housing 2 of the image sensor 4. However, in preferred embodiments the further target detection sensor and the whole optic safety device 1 are enclosed in a common casing.

Another aspect of the invention is related to an optical based (of hybrid) safety method, involving the use of the above described optical or hybrid safety device. The method comprises outputting the main surveillance digital image 63 of the field of view, and automatically analyzing it to seek for unsafe conditions, and in particular for the presence of targets in a dangerous area of the field of view. A safety alarm is outputted upon identification of a safety breach.

In parallel, the marker portion 64 of the first image 61 is analyzed to establish the image quality level. Thus, a safety alarm, being the same or different as the above-mentioned safety alarm, is automatically outputted upon establishing a poor image quality level.

## Claims

1. An optical safety device (1), comprising:
- a housing (2), having a lens opening (22) delimited by a perimetral portion (23),
- an image sensor (4) in the housing (2), the image sensor (4) having an image sensitive surface (41) configured to collect image data,
- a lens (3) mounted in the lens opening (22), the lens (3) being configured to focus a main optical image of a field of view on a focus area (A) on the sensitive surface (41) of the image sensor (4),
- a visual marker (7) arranged on a marker support portion of the housing (2) within said field of view, such that a marker optical image of the visual marker (7) is received on a marker projection area (E) of the focus area (A),
- a processing system (5) configured to form one or more digital images (61, 62) from the image data,
wherein the processing system (5) is further configured to:
- analyze a fixed marker portion (64) of a first digital image (61), formed from marker image data collected on the marker projection area (E), and
- establish an image quality level based on the analysis of the marker portion (64) of the first digital image (61).

2. The device (1) of claim 1, wherein the visual marker (7) is:
- directly represented on the perimetral portion (23) of the housing (2), preferably printed on the perimetral portion (23) of the housing (2), or
- represented on a marker piece (71) fixed to the housing (2), preferably the marker piece (71) being a label or a rigid marker piece, or
- a combination thereof.

3. The device (1) of claim 1 or 2, wherein:
- the focus area (A) is delimited by a focus border,
- the lens (3) is configured to project a border image of the perimetral portion (23) on a contour portion (B) inside the focus area (A), along the focus border,
- the marker projection area (E) is inside the contour portion (B).

4. The device of any claim 1-3, wherein the processing system (5) is configured to output a main surveillance digital image (63) of the field of view, formed from image data collected on a main portion (D) of the sensitive surface (41) of the image sensor (4), distinct from the marker projection area (E).

5. The device (1) of claim 4, wherein the focus area (A) is a circular area, and the main portion (D) of the focus area (A) is a rectangular area, preferably fully contained in the focus area (A).

6. The device (1) of claim 4 or 5, wherein the lens (3) is configured to cover a lens angle of view, the image sensor (4) is positioned and sized to cover at least the lens angle of view, and the main surveillance digital image (63) is formed to cover an output angle of view, smaller than the lens angle of view.

7. The device (1) of any claim 4-6, wherein the main surveillance digital image (63) is:
- a portion of the first digital image (61) that is distinct from the marker portion (64), or
- a second digital image (62) distinct from the first digital image (61).

8. The device (1) of any claim 1-7, wherein the visual marker (7) includes a geometric pattern in at least two colors delimited by contrast lines.

9. The device (1) of any claim 1-8, wherein the lens opening (22) is formed in a front wall (21) of the housing (2), the lens (3) is located in a recessed position in the front wall (21), and the visual marker (7) projects toward outside the housing (2) compared to a lens edge (31).

10. The device (1) of any claim 1-9, wherein establishing an image quality level comprises checking:
- a presence of image disturbing material on the lens (3) or in field of view,
- device calibration parameters, preferably including any of contrast, focus, zooming level and white balance, and/or
- an ageing of the lens and/or image sensor quality.

11. The device (1) of any claim 1-10, wherein the processing system (5) is configured to set device calibration parameters based on analyzing the fixed marker portion (64) of the first digital image (61).

12. A hybrid safety device, including:
- the optical safety device (1) of any claim 1-11, and
- a further target detection sensor, preferably a radar sensor, in signal communication with said processing system (5).

13. An optical based safety method comprising:
- providing the device (1) of any claim 1-12,
- outputting by the device (1) a main surveillance digital image (63) of the field of view,
- automatically analyzing the main surveillance digital image (63) and outputting a safety alarm upon identification of a safety breach,
- analyzing said fixed marker portion (64) to establish said image quality level, the fixed marker portion (64) being separate from the main surveillance digital image (63), and
- automatically outputting a safety alarm upon establishing a poor image quality level.
